# EUROPÄISCHE PATENTANMELDUNG

(11) **EP 4 800 877 A1**
(43) Veröffentlichungstag der Anmeldung: **02.09.2026**
(21) Anmeldenummer: 25160436.9
(22) Anmeldetag: 26.02.2025
(51) Int. Cl.: H02J 7/00

(54) **(MOBILE) BATTERIESTROMVERSORGUNG**

(71) Anmelder: Sol Research GmbH, 71032 Böblingen (DE)
(72) Erfinder: Kayser, Alexander, 71032 Böblingen (DE)
(74) Vertreter: Mzb PartmbB

(57) **Zusammenfassung**

Die Erfindung betrifft eine flexibel einsetzbare Energiestation (10) zur dezentralen Versorgung kabelgebundener Elektrogeräte, umfassend ein Gehäuse (12), wenigstens zwei Steckplätze (S1, S2, S3, S4) zur Aufnahme von wiederaufladbaren Batterien (30, 32), wobei sich die Steckplätze (S1, S2, S3, S4) innerhalb des Gehäuses (12) befinden, wenigstens einen Zwischenkreiswandler (38) zur Wandlung einer oder mehrerer Eingangsspannungen von einem oder mehreren der Steckplätze (S1, S2, S3, S4) in eine Zwischenkreisspannung (UZK) eines Zwischenkreises (36), und wenigstens einen Nutzwandler (42, 44) zur Wandlung der Zwischenkreisspannung (UZK) des Zwischenkreises (36) in Nutzspannung (UN1, UN2).

## Beschreibung

Die vorliegende Erfindung betrifft eine Energiestation zur dezentralen Versorgung kabelgebundener Elektrogeräte mit elektrischer Energie.

### Stand der Technik

Aus der Patentschrift EP3204995B1 ist eine tragbare Stromversorgung für die Stromversorgung von kabelgebundenen Elektrowerkzeugen bekannt. Die tragbare Stromversorgung weist an einer Außenseite eines Gehäuses Steckplätze für wiederaufladbare Batterien auf.

### Offenbarung der Erfindung

Wenngleich akkubetriebene Elektrogeräte mittlerweile in vielen Bereichen zur Anwendung kommen, besteht weiterhin ein Bedarf, kabelgebundene Elektrogeräte möglichst ortsungebunden nutzen zu können.

Typische Anwendungsgebiete betreffen beispielsweise die Nutzung von kabelgebundenen Elektrogeräten, insbesondere mit hohem Leistungsbedarf wie beispielsweise bei kabelgebundenen Handwerkzeugmaschinen oder Heißlufthaartrocknern, Backöfen, Mikrowellengeräten, oder dergleichen, auf Reisen, beim Camping, auf Baustellen und / oder allgemein an Orten, an denen kein anderer geeigneter Netzanschluss in Reichweite ist.

Zwar sind bereits Energiestationen bekannt, die grundsätzlich in der Lage sind, mithilfe von wiederaufladbaren Batterien ortsungebunden Netzanschlüsse oder andere standardisierte Stromversorgungsanschlüsse, beispielsweise auf Basis von USB-C, zur Verfügung zu stellen.

Jedoch gestaltet sich der Einsatz solcher bekannter Energiestationen oftmals aufwendig und wenig flexibel. So muss ein Benutzer für die Energiestation spezifisch passende Batterien bereitstellen. Diese muss er mit einem Ladegerät laden. Dann muss er die Energiestation mitsamt den vorgesehenen Batterien an den späteren Einsatzort bringen und dort das kabelgebundene Elektrogeräte anschließen. Dabei kann es passieren, dass die Energiestation bzw. die Batterien aufgrund geringer Kapazitäten zu wenig Energie bereitstellen können. Auch der umgekehrte Fall kann eintreten, dass die Energiestation zwingend eine bestimmte Mindestanzahl von Batterien zum Betrieb benötigt, wodurch erheblich mehr Kapazität zur Verfügung gestellt wird als für den jeweiligen Einsatzzweck tatsächlich benötigt wird. Derart überdimensionierte Energiestationen sind in der Regel unnötig teuer. Ihr hohes Gewicht erschwert und verteuert darüber hinaus einen Transport der Energiestation. Auch ist es mit hohen Kosten für den Benutzer verbunden, wenn er sich, beispielsweise für einen einfacheren Transport, für unterschiedliche Einsatzzwecke jeweils spezifisch angepasste Energiestationen, beispielsweise mit unterschiedlichen Gesamtkapazitäten, zulegt.

Aufgabe der vorliegenden Erfindung ist es daher, eine flexibel einsetzbare Energiestation zur dezentralen Versorgung kabelgebundener Elektrogeräte mit elektrischer Energie vorzustellen. Vorzugsweise sollte die Energiestation unter möglichst vielfältigen Einsatzbedingungen verwendbar sein. Auch eine lange Lebensdauer ist wünschenswert.

Gelöst wird die Aufgabe zunächst durch eine Energiestation, die ein Gehäuse umfasst. Sie umfasst des Weiteren wenigstens zwei Steckplätze zur Aufnahme von wiederaufladbaren Batterien, wobei sich die Steckplätze innerhalb des Gehäuses befinden, sowie wenigstens einen Zwischenkreiswandler zur Wandlung einer oder mehrerer Eingangsspannungen von einem oder mehreren der Steckplätze in eine Zwischenkreisspannung eines Zwischenkreises, und wenigstens einen Nutzwandler zur Wandlung der Zwischenkreisspannung des Zwischenkreises in eine Nutzspannung.

An die Steckplätze können wiederaufladbare Batterien angeschlossen werden. Mit der Nutzspannung lassen sich beispielsweise kabelgebundene Elektrogeräte betreiben, sofern die Batterien einen hinreichen Ladezustand aufweisen. Auch ist denkbar, mithilfe eines externen Netzanschlusses die Nutzspannung in den Nutzwandler einzuspeisen, um die Batterien zu laden.

Die Energiestation weist dabei mehrere Steckplätze zur Aufnahme der Batterien auf. Somit können je nach Bedarf, beispielsweise je nach benötigter Gesamtkapazität und / oder je nach benötigter Maximalleistung, unterschiedlich viele Batterien in die Energiestation eingesteckt und damit an diese angeschlossen werden. Somit kann die Energiestation flexibel an einen jeweiligen Bedarf angepasst werden. Insbesondere lassen sich das Gesamtgewicht der Energiestation und / oder die Gesamtkosten der Energiestation flexibel an den Bedarf anpassen. Die Hauptverschleißteile, typischerweise die Batterien, können einfach ausgetauscht bzw. erneuert werden, sodass die Energiestation eine sehr hohe Gesamtlebensdauer erreichen kann.

Dadurch, dass wenigstens ein Zwischenkreiswandler vorgesehen ist, der elektrisch zwischen einem oder mehreren der Steckplätze und dem Zwischenkreis geschaltet sein kann, können unterschiedliche Arten und / oder unterschiedliche Anzahlen von Batterien in die Steckplätze eingesteckt und zur Erzeugung der Nutzspannung genutzt werden. Die Eingangsspannungen werden in die Zwischenkreisspannung durch den Zwischenkreiswandler gewandelt, sodass die Zwischenkreisspannung konstant auf einem vordefinierten Wert gehalten werden kann; und dies unabhängig oder zumindest weitgehend unabhängig von den verwendeten Batterien und / oder Batteriezuständen der verwendeten Batterien.

Eine Leistungselektronik zur Verschaltung des Zwischenkreises mit den Schnittstellen bzw. den Batterien kann auf eine Vielzahl von Einzelschaltungen aufgeteilt werden, sodass jede der Einzelschaltungen lediglich für eine geringe Leistung ausgelegt sein kann und damit mit kostengünstigen Leistungsbauelementen geringer Leistung aufgebaut werden kann.

Lediglich die Leistungselektronik zur Verschaltung des Zwischenkreises mit dem Nutzanschluss sollte auf die maximal bereitzustellende Gesamtleistung ausgelegt werden. Insofern kann vorgesehen sein, dass nur für diese Leistungselektronik leistungsstarke und damit tendenziell teure Hochleistung-Leistungsbauelemente eingesetzt werden.

Die Energiestation benötigt somit nur wenige Hochleistungs-Leistungsbauelemente wie beispielsweise Hochleistungs-Halbleiterschalter. Insgesamt kann somit durch den mehrstufigen Aufbau mit Zwischenkreis die Leistungselektronik der Energiestation kostengünstig herstellbar sein.

Der Nutzanschluss und / oder die Zwischenkreisspannung können unterschiedliche elektrische Parameter aufweisen. Beispielsweise können sie Gleichspannungen und / oder Wechselspannungen sein. Sie können unterschiedliche Spannungen und / oder Anschlusswerte aufweisen.

Beispielsweise kann der Nutzanschluss 230 V Wechselspannung, 5 V Gleichspannung, 12 V Gleichspannung oder 380 V Drehstrom entsprechen. Die Nutzspannung kann an einem Nutzanschluss am Gehäuse abgreifbar sein. Der Nutzanschluss kann in das Gehäuse eingelassen sein. Er kann von außerhalb des Gehäuses benutzbar sein. Denkbar ist, mehrere Nutzspannungen, beispielsweise mittels mehrer, verschiedener Nutzanschlüsse, bereitzustellen und diese dazu jeweils aus der Zwischenspannung abzuleiten.

Die Energiestation kann mobil, insbesondere tragbar, sein. Dazu kann ihr Gewicht exklusive Batterien höchstens 5 kg betragen. Sie kann ein Gesamtgewicht inklusive Batterien von höchstens 23 kg einhalten, sodass die Energiestation mitsamt Batterien für einen durchschnittlichen Erwachsenen komfortabel tragbar ist. Zur Verbesserung der Mobilität kann die Energiestation auch kompakt aufgebaut sein. Beispielsweise kann ihr Gehäuse so dimensioniert sein, dass seine Höhe, seine Breite und / oder seine Länge höchstens 1 m beträgt bzw. betragen. Denkbar ist auch, dass die Energiestation ein Fahrgestell, beispielsweise mit Rollen oder Rädern, aufweist. Das Fahrgestell, insbesondere die Rollen oder Räder, können ausklappbar angeordnet sein, so dass es bei Nichtgebrauch platzsparend verstaut werden kann und / oder beispielsweise mehrere Energiestationen aufeinander gestapelt werden können.

Der Zwischenkreiswandler und / oder der Nutzwandler kann bzw. können zur bidirektionalen Wandlung eingerichtet sein. Somit ist es möglich, die Energiestation sowohl zu verwenden, um die Netzspannung bereitzustellen, um beispielsweise ein kabelgebundenes Elektrogerät zu speisen, als auch die Energiestation zu verwenden, um eine oder mehrere der Batterien mithilfe einer an den Nutzanschluss angeschlossenen Spannungsquelle aufzuladen.

Günstig ist, wenn die Steckplätze hot plug-fähig sind. Unter "hot plug-fähig" kann verstanden werden, dass im laufenden Betrieb der Energiestation an einem Steckplatz eine Batterie angeschlossen oder von dem betreffenden Steckplatz entfernt werden kann, ohne dass die Energiestation oder eine der Batterien oder ein an die Energiestation angeschlossenes Elektrogerät dadurch Schaden nimmt. Dadurch kann während des Betriebs der Energiestation, beispielsweise um ein daran angeschlossenes Elektrogerät zu betreiben, eine Batterie hinzugefügt, ausgetauscht und / oder entfernt werden. Batterien mit geringem Ladezustand können somit, beispielsweise mithilfe eines separaten Ladegeräts, parallel zum Betrieb der Energiestation und ohne Unterbrechung des Betriebs der Energiestation wieder aufgeladen werden. Somit wird es möglich, ähnlich einem Netzanschluss, ein an die Energiestation angeschlossenes Elektrogerät unterbrechungsfrei und über einen langen Zeitraum hinweg zu betreiben. Dies kann beispielsweise zum Betrieb von Kühlgeräten, beispielsweise auf Reisen oder beim Camping, besonders vorteilhaft sein. Auch medizinische Geräte, beispielsweise Sauerstoffgeneratoren zur Atmungsunterstützung, externe Blutpumpen zur Herzmuskelunterstützung oder dergleichen, können so weitgehend ortsungebunden und sicher betrieben werden, solange hinreichend aufgeladene Ersatzbatterien verfügbar sind.

Die Energiestation kann zusätzlich ein Lastmanagement-System umfassen. Das Lastmanagement-System kann eingerichtet sein, in Abhängigkeit von einem oder mehreren Batteriezuständen von an den Steckplätzen angeschlossenen Batterien elektrische Lasten auf die betreffenden Steckplätze, und damit insbesondere auf die Batterien, zu verteilen. Ein Batteriezustand kann beispielsweise einem Ladezustand entsprechen. Der Batteriezustand kann auch einem Alterungszustand entsprechen. Allgemein kann der Batteriezustand einem elektrischen Parameter der betreffenden Batterie entsprechen. Das Lastmanagement-System kann somit beispielsweise verhindern, dass sich Batterien mit unterschiedlichen Ladezuständen gegenseitig auf- oder entladen anstatt Leistung am Nutzanschluss bereitzustellen.

Denkbar ist insbesondere, dass die Energiestation unterschiedliche Betriebsmodi aufweist, die sich hinsichtlich des Pfades unterscheiden, entlang dessen elektrische Leistung fließt.

Zur Bereitstellung von elektrischer Leistung am Nutzanschluss kann beispielsweise ein Betriebsmodus vorsehen, dass Leistung aus ein oder mehreren der Batterien über die entsprechenden Schnittstellen bezogen wird und über den Zwischenkreis in Nutzspannung am Nutzanschluss gewandelt wird.

Ein Betriebsmodus kann auch vorsehen, dass mithilfe der an den Nutzanschluss angeschlossenen Spannungsquelle ein oder mehrere der Batterien geladen werden. In diesem Fall kann als Pfad ein Fluss der elektrischen Leistung von dem Nutzanschluss über den Zwischenkreis zu den betreffenden Batterien vorgesehen sein.

Denkbar ist auch, dass ein Betriebsmodus oder mehrere Betriebsmodi vorsehen kann bzw. können, dass der Pfad im Verlaufe des Betriebs der Energiestation geändert wird. Denkbar ist beispielsweise, Batterien nicht gleichzeitig, sondern nacheinander aufzuladen.

So kann, wenn die Energiestation zum Laden der Batterien genutzt wird, zunächst eine erste Batterie aufgeladen werden, sodass diese Batterie bereits in einem batteriebetriebenen Elektrogerät genutzt werden kann, während andere Batterien anschließend oder weiterhin aufgeladen werden.

Auch ist ein Betriebsmodus denkbar, der als Boostmodus für die Netzspannung am Nutzanschluss von den Batterien bereitgestellte Leistung zusätzlich zu einer von einem Netzanschluss bereitgestellten Leistung anbietet. So können kabelgebundene Elektrogeräte mit besonders hoher Leistung, insbesondere einer Leistung, die eine zulässige maximal Leistung beispielsweise eines Netzanschlusses übersteigt, betrieben werden.

Bei einer Klasse von Ausführungsformen der Erfindung kann die Zwischenkreisspannung eine Gleichspannung sein. Dann kann der Zwischenkreiswandler als DC/DC-Wandler ausgelegt sein. Insbesondere kann er als Schaltwandler ausgebildet sein und dadurch, im Vergleich zu beispielsweise Induktion-basierten Wandlern einen hohen Wirkungsgrad bei der Wandlung erreichen.

Die Energiestation kann zusätzlich einen Zwischenkreisanschluss zum Anschluss an den Zwischenkreis umfassen. Der Zwischenkreisanschluss kann einen Stecker, eine Buchse, allgemein einen drahtgebundenen und / oder einen drahtlosen Anschluss umfassen. Der Zwischenkreisanschluss kann unidirektional, beispielsweise zur Energieentnahme aus dem Zwischenkreis oder zur Energieeinspeisung in den Zwischenkreis, oder bidirektional ausgebildet sein.

Der Zwischenkreisanschluss kann direkt mit dem Zwischenkreis verbunden sein.

Alternativ ist auch denkbar, einen Spannungswandler, beispielsweise einen DC/DC-Wandler zwischen den Zwischenkreisanschluss und den Zwischenkreis zu schalten. Über den Zwischenkreisanschluss kann somit ein Zugang zum Zwischenkreis, beispielsweise an einer Außenseite des Gehäuses, bereitgestellt werden. Über den Zwischenkreisanschluss kann beispielsweise elektrische Leistung aus einem Fotovoltaik-Modul in den Zwischenkreis der Energiestation eingespeist werden.

Besonders flexible Ausführungsformen der Energiestation ergeben sich, wenn der Nutzwandler und / oder der Zwischenkreiswandler über jeweils einen entsprechenden Modulkonnektor mit dem Zwischenkreis werkzeuglos verbindbar ist bzw. sind. Dann können der Nutzwandler und / oder der Zwischenkreiswandler jeweils in einem separaten Modul, beispielsweise jeweils inklusive einem Modulgehäuse, angeordnet sein bzw. werden. Je nach Bedarf können der Nutzwandler und / oder der Zwischenkreiswandler und / oder die entsprechenden Module insgesamt werkzeuglos ausgetauscht werden. So können auf einfache Weise beispielsweise Leistungsdaten der Energiestation an einen bestimmten Bedarf angepasst werden. Für eine einfache werkzeuglose Verbindung können die Modulkonnektoren beispielsweise jeweils eine standardisierte Buchse, einen Schleifkontakt und / oder einen standardisierten Stecker umfassen. Denkbar ist auch, dass die Modulkonnektoren zur drahtlosen Verbindung, beispielsweise per Induktion, eingerichtet sind.

Für eine besonders kompakte Bauweise der Energiestation kann das Gehäuse eingerichtet sein, dass es in seiner Größe geändert werden kann. Beispielsweise kann das Gehäuse mehrere, ineinander schiebbare oder auseinanderziehbare Einzelteile aufweisen. Die Einzelteile können sich bereichsweise überlappen. Das Gehäuse kann auch einen dehnbaren Ziehharmonika-Bereich aufweisen. Alternativ oder ergänzend kann das Gehäuse auch einen elastisch dehnbaren Bereich aufweisen. Dann kann die Energiestation verkleinert werden, beispielsweise wenn kurze und / oder dünne Batterien mit beispielsweise kleinen Kapazitäten verwendet werden und die Batterien dadurch insgesamt lediglich einen geringen Raum einnehmen. Dadurch lässt sich die Energiestation auch besser tragen. Sie kann somit besonders flexibel eingesetzt werden.

Zur Optimierung der Lebensdauer der Energiestation, insbesondere der Lebensdauern der verwendeten Batterien, kann die Energiestation ein Klimatisierungselement umfassen. Das Klimatisierungselement kann ein Heizelement umfassen. Es kann auch ein Kühlelement umfassen. Insbesondere kann es ein kombiniertes Kühl- und Heizelement umfassen. Das Klimatisierungselement kann beispielsweise ein Peltier-Element umfassen. Denkbar ist auch, dass es einen Lüfter zur Einstellung einer Konvektion innerhalb des Gehäuses umfasst.

Um bei einer Vielzahl von Umgebungsbedingungen eingesetzt werden zu können, kann die Energiestation, insbesondere das Gehäuse staubdicht und / oder wasserdicht, beispielsweise mindestens gemäß dem Standard IP 67, ausgebildet sein. Anschlüsse können dazu beispielsweise mit einem selbstschließenden Deckel versehen sein. Kanten des Gehäuses können mit Dichtungen versehen sein.

Weist das Gehäuse Einschubschächte, beispielsweise zur Aufnahme der Batterien, auf, so können an deren Kanten Gummilippen und / oder Gummidichtungen vorgesehen sein, die das Gehäuse dicht an die in ihnen aufgenommenen Batterien anschließen und abdichten. Auch können die Einschubschächte Deckel aufweisen, sodass diese, wenn keine Batterie in ihnen aufgenommen ist, ebenfalls zumindest Staub- und Spritzwasser-geschützt sind.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein. In der schematischen Zeichnung sind Ausführungsbeispiele der Erfindung dargestellt, welche in der nachfolgenden Beschreibung näher erläutert werden.

Kurze Beschreibung der Zeichnungen
- Fig. 1: eine perspektivische Darstellung einer Energiestation und
- Fig. 2: ein Blockschaltbild der Energiestation.

Zur Erleichterung des Verständnisses der Erfindung werden in der nachfolgenden Figurenbeschreibung für sich entsprechende Elemente jeweils die gleichen Bezugszeichen verwendet.

### Ausführungsformen der Erfindung

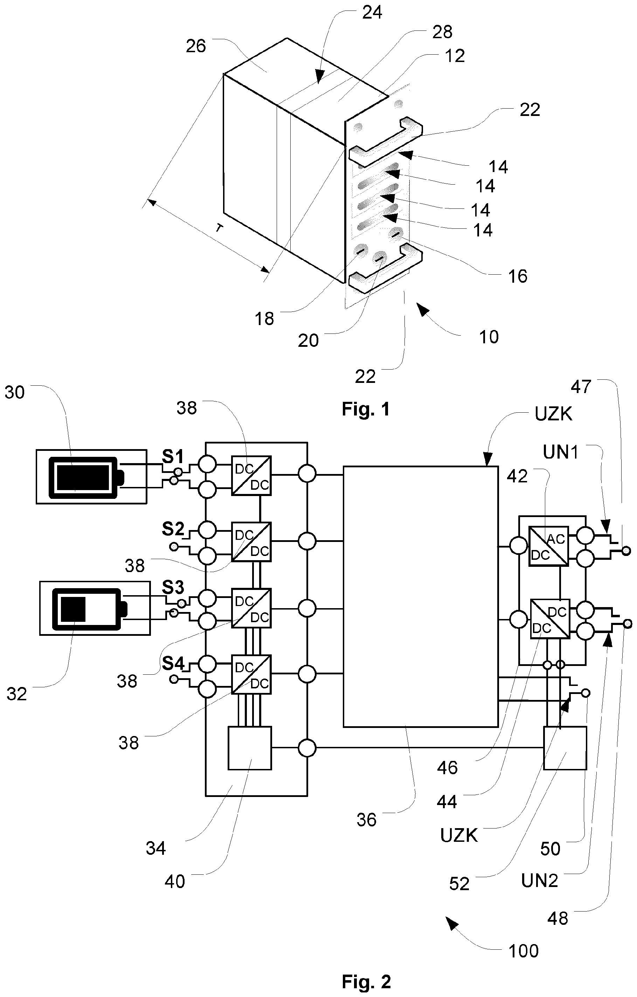

Fig. 1 zeigt eine Energiestation 10, die ein Gehäuse 12 umfasst.

Die Energiestation 10 weist vier Einschubschächte 14 auf, in die wiederaufladbare Batterien (in Fig. 1 nicht dargestellt) eingeschoben werden können.

Die Einschubschächte 14 weisen Rastmechaniken auf, mit denen die Batterien in den jeweiligen Einschubschächten 14 verrastet und damit gegen ein unbeabsichtigtes Herausfallen gesichert werden können.

Das Gehäuse 12 ist im Wesentlichen als Quader geformt. Mehrere Energiestationen 10 können somit dicht nebeneinander aufgereiht oder aufeinandergestapelt werden. Denkbar ist, dass das Gehäuse 12 zu einer Form eines Systemgehäuses, beispielsweise einer Serie von Boxen zur Lagerung von Handwerkzeugmaschinen kompatibel ist, sodass das Gehäuse 12 mit solchen Systemgehäusen verbunden und / oder platzsparend aufeinandergestapelt oder nebeneinander aufgereiht werden kann.

Die Energiestation 10 weist ferner einen Nutzanschluss 16 auf, an dem eine erste Nutzspannung in Form einer 230 V-Wechselspannung abgreifbar ist oder eingespeist werden kann. Der Nutzanschluss 16 kann beispielsweise in Form Schutzkontaktsteckdose ausgebildet sein.

Sie weist zusätzlich einen zweiten Nutzanschluss 18 auf, an dem eine zweite Nutzspannung in Form einer 5 V Gleichspannung abgreifbar ist. Der zweite Nutzanschluss 18 kann beispielsweise in Form einer USB-c-Buchse gebildet sein.

Des Weiteren umfasst sie einen Zwischenkreisanschluss 20, an dem eine Zwischenkreisspannung eines Zwischenkreises in Form einer Gleichspannung abgreifbar ist.

Die Energiestation 10 weist darüber hinaus Handgriffe 22 auf, an denen die Energiestation 10 zu einem Einsatzort getragen werden kann.

Das Gehäuse 12 ist eingerichtet, dass seine Größe, insbesondere seine Tiefe T, geändert werden kann. Dazu weist das Gehäuse 12 einen Überlappungsbereich 24 auf, an dem sich zwei Gehäuseteile 26 und 28 des Gehäuses 12 überlappen. Im Bereich des Überlappungsbereichs 24 können die beiden Gehäuseteile 26 und 28 zusammengeschoben oder auseinandergezogen werden. So lässt sich die Tiefe T des Gehäuses 12 einstellen. Insbesondere kann somit die Tiefe T auf eine maximale Länge von verwendeten Batterien eingestellt werden.

Das Gehäuse 12 weist an seinen Kanten Dichtungen auf, sodass es insgesamt gemäß IP 67 staubgeschützt und Spritzwasser-geschützt ist.

Fig. 2 zeigt ein Blockschaltbild 100 der Energiestation 10.

In der in Fig. 2 dargestellten Situation sind zwei Batterien 30, 32 an zwei Steckplätze S1, S3 von insgesamt vier Steckplätzen S1, S2, S3, S4 angesteckt. Die Batterien 30, 32 sind wiederaufladbar. Beispielsweise können die Batterien 30, 32 Lithiumbasierte Batterien sein. Bei einer alternativen Ausführungsform können die Batterien 30, 32 auch als Natrium-Ionen-Batterien ausgebildet sein. Denkbar ist auch, unterschiedliche Arten von Batterien verwendet werden. Beispielsweise können Batterien für hohe Spitzenleistungen sowie Batterien mit besonders hohen Kapazitäten, aber geringeren Spitzenleistungen und / oder einer geringeren Impulsbelastbarkeit kombiniert werden. Je Steckplatz kann bei diesem Ausführungsbeispiel eine Batterie angeschlossen sein. Denkbar ist, insbesondere für Energiestationen 10 mit besonders hohen Gesamtkapazitäten, mehr als vier Steckplätze, beispielsweise 8 oder 12, vorzusehen.

Die Steckplätze S1, S2, S3 und S4 befinden sich innerhalb des Gehäuses 12 (siehe Figur 1) in Endbereichen der Einschubschächte 14 (siehe ebenfalls Figur 1).

Wie anhand des Blockschaltbildes 100 zu erkennen ist, weist die Energiestation 10 schaltungstechnisch einen modularen Aufbau auf.

Ein Zwischenkreis-Modul 34 ist zwischen die Steckplätze S1 bis S4 und einen Zwischenkreis 36 geschaltet. Es ist mittels werkzeuglos lösbaren Modulkonnektoren, beispielsweise Steckverbinder, mit der übrigen Elektronik der Energiestation 10 verbunden. Der Zwischenkreis 36 wird auf einer konstanten Zwischenkreisspannung UZK von beispielsweise 36 V Gleichspannung gehalten. Bei alternativen Ausführungsformen, beispielsweise wenn die Energiestation 10 lediglich eine Wechselspannung von beispielsweise 230 V zur Verfügung stellen soll, kann die Zwischenkreisspannung UZK auch beispielsweise oberhalb der maximalen Amplitude, also beispielsweise im Bereich von 325 und 400 V liegen. Bei solchen Ausführungsformen kann die Wandlung der Zwischenkreisspannung UZK in die Wechselspannung schaltungstechnisch besonders einfach und mit hohem Wirkungsgrad erfolgen.

Das Zwischenkreis-Modul 34 umfasst vier Zwischenkreiswandler 38 in Form von DC-DC-Schaltwandlern. Jeder der Zwischenkreiswandler 38 ist an einen der Steckplätze S1 bis S4 angeschlossen und wandelt die jeweiligen, an den Steckplätzen S1 bis S4 anliegenden Spannungen, soweit eine Batterie mit hinreichendem Ladezustand an den jeweiligen Steckplatz angeschlossen ist, in die Zwischenkreisspannung UZK.

Die Zwischenkreiswandler 38 sind bidirektional ausgebildet. Sie können somit je nach einem gewählten Betriebsmodus der Energiestation 10 entweder in einem Bereitstellungs-Betriebsmodus die Zwischenkreisspannung UZK mit Hilfe der angeschlossenen Batterien, im Beispiel also die Batterien 30, 32, bereitstellen, oder in einem Lade-Betriebsmodus bei anliegender Zwischenkreisspannung UZK ein oder mehrere der vorhandenen Batterien aufladen.

Das Zwischenkreis-Modul 34 umfasst zusätzlich ein Lastmanagement-System 40. Das Lastmanagement-System 40 ist mit jedem der Zwischenkreiswandler 38 verbunden. Es ist eingerichtet, die Zwischenkreiswandler 38 in Abhängigkeit des gewählten Betriebsmodus der Energiestation 10 zu steuern. Zudem ist es eingerichtet, die benötigte bzw. bereitzustellende elektrische Leistung auf die Steckplätze S1, S2, S3, S4 bzw. auf die an diese angeschlossenen Batterien, beispielsweise die Batterien 30, 32, entsprechend einem Lastschema zu verteilen. Das Lastschema kann abhängen von Batteriestatus der Batterien, insbesondere Ladezuständen und / oder Alterungszuständen, Leistungsdaten der Batterien, beispielsweise maximale Lade- und / oder Entladeströme und / oder Kapazitäten, sowie dem gewählten Betriebsmodus. Der Betriebsmodus kann dazu bei manchen Ausführungsformen auch definieren, ob Batterien in bestimmten Reihenfolgen und ggf. in welchen Reihenfolgen entladen und / oder geladen werden sollen, oder ob Ladungen und / oder Entladungen gleichmäßig auf die Batterien verteilt werden.

Das Zwischenkreis-Modul 34 speist die Zwischenkreisspannung UZK in den Zwischenkreis 36.

Zwei Nutzwandler 42, 44 sind in einem Nutzwandler-Modul 46 zusammengefasst. Auch das Nutzwandler-Modul 46 ist mittels werkzeuglos lösbaren Konnektoren, beispielsweise Steckverbindern, mit der übrigen Elektronik der Energiestation 10 verbunden. Die Nutzwandler 42, 44 sind über das Nutzwandler-Modul 46 mit dem Zwischenkreis 36 verbunden.

Der Nutzwandler 42 umfasst einen bidirektional arbeitenden DC/AC-Wandler zur Nutzung, insbesondere Erzeugung und / oder Aufnahme, einer ersten Netzspannung UN1, an einem Nutzanschluss 47, beispielsweise 230 V Wechselspannung mit 50 Hz Frequenz.

Der Nutzwandler 44 umfasst einen bidirektional arbeitenden DC/DC-Wandler zur Nutzung, insbesondere Erzeugung und / oder Aufnahme, einer zweiten Netzspannung UN2 an einem Nutzanschluss 48, beispielsweise 5V Gleichspannung.

An einem Zwischenkreisanschluss 50 ist die Zwischenkreisspannung UZK abgreifbar und / oder einspeisbar.

Eine Steuerung 52 ist zur Steuerung der Energiestation 10 vorgesehen. Die Steuerung 52 ist mit dem Zwischenkreis-Modul 34 und dem Nutzwandler-Modul 46 verbunden. Sie ist insbesondere eingerichtet, das Lastmanagement-System 40 sowie die Nutzwandler 42, 44 zu steuern.

Sie weist dazu einen Rechner mit auf diesem ausführbaren Programmcode sowie eine Displayeinheit und eine Eingabeeinheit, beispielsweise in Form eines berührungsempfindlichen Bildschirms, auf. Sie kann auch ein drahtloses Schnittstellenmodul aufweisen, beispielsweise um einem Benutzer der Energiestation 10 eine Benutzung aus der Ferne, beispielsweise mittels eines auf einem Smartphone installierten Programms, zu ermöglichen.

### Bezugszeichenliste

- 10: Energiestation
- 12: Gehäuse
- 14: Einschubschacht
- 16: Nutzanschluss
- 18: Nutzanschluss
- 20: Zwischenkreisanschluss
- 22: Handgriffe
- 24: Überlappungsbereichs
- 26: Gehäuseteil
- 28: Gehäuseteil
- 30: Batterie
- 32: Batterie
- 34: Zwischenkreis-Modul
- 36: Zwischenkreis
- 38: Zwischenkreiswandler
- 40: Lastmanagement-System
- 42: Nutzwandler
- 44: Nutzwandler
- 46: Nutzwandler-Modul
- 47: Nutzanschluss
- 48: Nutzanschluss
- 50: Zwischenkreisanschluss
- 52: Steuerung
- S1: Steckplatz
- S2: Steckplatz
- S3: Steckplatz
- S4: Steckplatz
- S1, S2, S3, S4: Steckplätze
- T: Tiefe
- UN1: erste Nutzspannung
- UN2: zweite Nutzspannung
- UZK: Zwischenkreisspannung

## Patentansprüche

1. Energiestation (10), umfassend
- ein Gehäuse (12),
- wenigstens zwei Steckplätze (S1, S2, S3, S4) zur Aufnahme von wiederaufladbaren Batterien (30, 32), wobei sich die Steckplätze (S1, S2, S3, S4) innerhalb des Gehäuses (12) befinden,
- wenigstens einen Zwischenkreiswandler (38) zur Wandlung einer oder mehrerer Eingangsspannungen von einem oder mehreren der Steckplätze (S1, S2, S3, S4) in eine Zwischenkreisspannung (UZK) eines Zwischenkreises (36), und
- wenigstens einen Nutzwandler (42, 44) zur Wandlung der Zwischenkreisspannung (UZK) des Zwischenkreises (36) in Nutzspannung (UN1, UN2).

2. Energiestation (10) nach dem vorhergehenden Patentanspruch, **dadurch gekennzeichnet, dass** die Energiestation (10) mobil, insbesondere tragbar, ist.

3. Energiestation (10) nach einem der vorhergehenden Patentansprüche, **dadurch gekennzeichnet, dass** der Zwischenkreiswandler (38) und / oder der Nutzwandler (42) zur bidirektionalen Wandlung eingerichtet ist bzw. sind.

4. Energiestation (10) nach einem der vorhergehenden Patentansprüche, **dadurch gekennzeichnet, dass** die Steckplätze (S1, S2, S3, S4) hot plug-fähig sind.

5. Energiestation (10) nach einem der vorhergehenden Patentansprüche, zusätzlich ein Lastmanagement-System (40) umfassend, das eingerichtet ist, in Abhängigkeit von einem oder mehreren Batteriezuständen von an den Steckplätzen (S1, S2, S3, S4) angeschlossenen Batterien (30, 32) elektrische Lasten auf die betreffenden Steckplätze (S1, S2, S3, S4) zu verteilen.

6. Energiestation (10) nach einem der vorhergehenden Patentansprüche, **dadurch gekennzeichnet, dass** die Energiestation (10) unterschiedliche Betriebsmodi aufweist, die sich hinsichtlich des Pfades unterscheiden, entlang dessen elektrische Leistung fließt.

7. Energiestation (10) nach einem der vorhergehenden Patentansprüche, **dadurch gekennzeichnet, dass** die Zwischenkreisspannung (UZK) eine Gleichspannung ist.

8. Energiestation (10) nach einem der vorhergehenden Patentansprüche, zusätzlich umfassend einen Zwischenkreisanschluss (20) zum Anschluss an den Zwischenkreis (36).

9. Energiestation (10) nach einem der vorhergehenden Patentansprüche, **dadurch gekennzeichnet, dass** zwischen dem Zwischenkreisanschluss (20) und dem Zwischenkreis (36) ein weiterer Spannungswandler, beispielsweise ein DC/DC-Wandler, geschaltet ist.

10. Energiestation (10) nach einem der vorhergehenden Patentansprüche, **dadurch gekennzeichnet, dass** der Nutzwandler (42) über einen Konnektor mit dem Zwischenkreis (36) werkzeuglos verbindbar ist.

11. Energiestation (10) nach einem der vorhergehenden Patentansprüche, **dadurch gekennzeichnet, dass** der Zwischenkreiswandler (38) über einen Konnektor mit dem Zwischenkreis (36) werkzeuglos verbindbar ist.

12. Energiestation (10) nach einem der vorhergehenden Patentansprüche, **dadurch gekennzeichnet, dass** das Gehäuse (12) in seiner Größe geändert werden kann.

13. Energiestation (10) nach einem der vorhergehenden Patentansprüche, zusätzlich umfassend ein Klimatisierungselement.

14. Energiestation (10) nach einem der vorhergehenden Patentansprüche, **dadurch gekennzeichnet, dass** wenigstens das Gehäuse (12) staubgeschützt und / oder wasserdicht ist nach mindestens IP 67.
